# EUROPEAN PATENT SPECIFICATION

(11) **EP 2 952 634 B1**
(45) Date of publication and mention of the grant of the patent: **13.03.2019**
(21) Application number: 15169779.4
(22) Date of filing: 29.05.2015
(51) Int. Cl.: B66C 3/02, B66C 3/12, G01B 7/00, E02F 3/413, E02F 3/47, E02F 9/26

(54) **LOADING AND UNLOADING APPARATUS COMPRISING A GRAB BUCKET WITH A CLOSURE DETECTING SYSTEM**
GREIFEREINRICHTUNG MIT EINEM SCHLIESSÜBERWACHUNGSSYSTEM
DISPOSITIF PRENEUR AVEC UN SYSTÈME DE DÉTECTION DE L'ÉTAT OUVERT OU FERMÉ

(30) Priority: 03.06.2014 IT RM20140288
(43) Date of publication of application: 09.12.2015
(73) Proprietor: Enel Produzione S.p.A., 00198 Roma RM (IT)
(72) Inventor: Ronsivalle, Fabio, I-00198 Roma (IT); Bertella, Moreno, I-00198 Roma (IT); Moro, Valter, I-00198 Roma (IT)
(74) Representative: Carangelo, Pierluigi

(56) References cited:
- EP-A1- 1 983 305
- DE-A1- 2 509 003
- JP-A- 2003 238 066
- JP-A- 2003 247 247
- US-A- 6 134 815
- US-A1- 2005 000 124
- US-B1- 6 168 221

## Description

The present disclosure relates to the technical field of apparatus for loading and unloading loose materials and in particular relates to a loading and unloading apparatus comprising a system for detecting the state of closure of a two-shell grab bucket.

For a long time two-shell grab buckets have been widely used for loading and unloading loose materials. For example, two-shell grab buckets are used to unload loose materials, such as coal, from the holds of ships and load such materials in a place of storage or on a means of transport, such as a conveyor belt or a target container.

In the two-shell grab buckets of the prior art it may happen that in some applications the operator controlling the grab bucket is in a position or at a distance from the bucket such that it is difficult or impossible for him to see the effective state of complete closure of the two shells of the bucket during the loading of the loose material. This could result in a spillage of material in the lifting and/or translation and/or in roto-translation movements of the grab bucket to the place of storage or to the means of transport or to the target container. The potential episodic spillage of material, although slight and normally falling back into the holds of the vessels, is in any case to be avoided so as to maximise both technical and environmental performances.

Document US2005/000124 A1 discloses a two-shell grab bucket driven by hydraulic cylinders with an integrated sensor in at least one hydraulic cylinder. The opening/closing status of the shells is derived indirectly by monitoring the linear excursion within the hydraulic cylinder. Such indirect measurement may be subject to errors introduced by the clearances/tolerances present in the kinematic chain. Furthermore, the detecting system of the opening/closing status of the shells described above is hard to apply to grab buckets devoid of a hydraulic cylinder actuation system with hydraulic cylinders or grab buckets that are initially supplied by the manufacturers without the above detecting system. This document serves as the basis for the preamble of independent claim 1.

Document DE2509003 discloses a jaw grab bucket for lifting loads with jaws fitted with powerful magnets. Said magnets perform merely a function of lifting the load.

A general purpose of the present disclosure is to provide a loading and unloading apparatus comprising a two-shell grab bucket and system for detecting the closure status of the two-shell grab bucket which can solve or minimise the problems described above with reference to the prior art.

This and other purposes are achieved by a loading and unloading apparatus comprising a two-shell grab bucket and a system for detecting the closure status of the two-shell grab bucket as defined in claim 1 in its most general form, and in the dependent claims in some of its particular embodiments.

The invention will be clearer to be understood from the following detailed description of its embodiments, made by way of a non-limiting example with reference to the appended drawings, wherein:
- Figure 1 shows a schematic side view of a loading and unloading apparatus of loose materials comprising a two-shell grab bucket to which a system for detecting the state of closure of the shells is applied and in which the two shells are in an angular open position;
- Figure 2 shows a schematic side view of the loading and unloading apparatus in figure 1, in which the two shells of the grab bucket are in a completely closed angular position;
- Figure 3 shows a perspective view of a container of the detecting system in figure 1; and
- Figure 4 shows a schematic view in lateral cross-section of two containers of the detecting system in figure 1 in a condition in which the two shells of the grab bucket are in a completely closed angular position.

In the appended drawings, elements which are the same or similar will be indicated using the same reference numerals.

With reference to the appended drawings, reference numeral 1 globally denotes a loading and unloading apparatus of loose materials comprising a two-shell grab bucket 2. The loading and unloading apparatus 1 is for example, without thereby introducing any limitation, intended for unloading cargo from the hold of tanker for coal intended to supply a power plant.

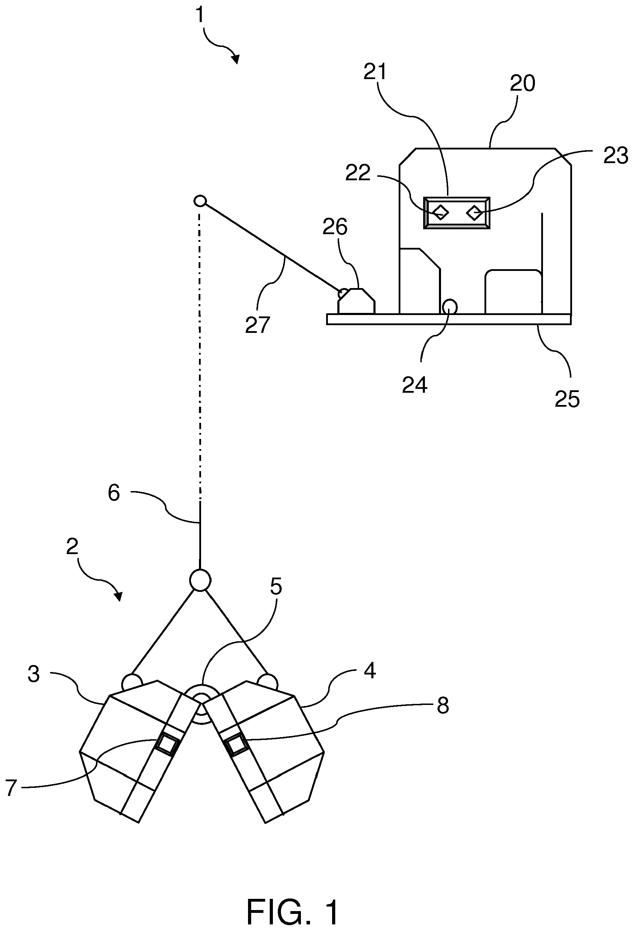

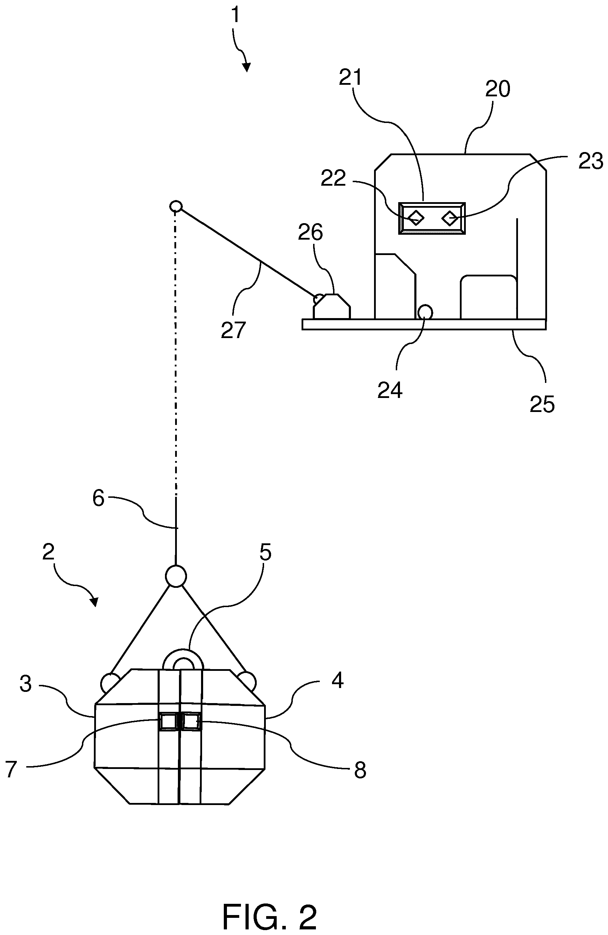

The two-shell grab bucket 2 is equipped with a first 3 and a second 4 shell rotatably hinged to each other so as to be reciprocally moved between a completely open angular position, shown in figure 1, and a completely closed angular position, shown in figure 2. The first 3 and the second shell 4 are for example hinged to each other by a cylindrical hinge 5.

The loading and unloading apparatus 1 further comprises a control cabin 20 of the two-shell grab bucket 2 housing a control station for an operator.

The loading and unloading apparatus 1 comprises members for moving the two-shell grab bucket 2, such as one or more motors 26, an arm 27 and one or more metal cables 6 operatively connected to the two-shell grab bucket 2. Said moving members are in themselves known to an expert in the field and for this reason will not be described in greater detail.

The loading and unloading apparatus 1 comprises a detecting system 7, 8, 21 of the closed or open status of the two-shell grab bucket 2. The detecting system 7, 8, 21 of the closed or open status of the grab bucket 2 comprises:
- a magnetic field sensor 14, adapted to detect the presence of a magnetic field and to provide in output a signal bearing information on said magnetic field;
- a first container 7 attached, or adapted to be attached, to the first shell 3 to be integral therewith in movement and comprising a first housing seat 12 which houses the magnetic field sensor 14.

The detecting system 7, 8, 21 of the closed or open status of the two-shell grab bucket 2 further includes:
- a magnetic field generator 15;
- a second container 8 attached, or adapted to be attached, to the second shell 4 to be integral therewith in movement and comprising a housing seat 13 in which the magnetic field generator 15 is housed. Preferably the magnetic field generator can be attached inside the housing seat 13 so that the attachment position can be adjusted during installation and setup of the system. For example, according to a particularly advantageous embodiment, the magnetic field generator 15 is fitted on a sliding support, i.e. a skate sliding on a guide, housed inside the housing seat 13, the attachment position of which can be adjusted. The stroke of said sliding support along the guide is for example equal to a few centimetres, for example two or three centimetres.

From the above description it can be seen how in an attachment configuration to the respective shells 3, 4, the first 7 and the second 8 container are adapted and configured to rotate in relation to one another, each being integral in rotation with the respective shell.

The detecting system 7, 8, 21 of the closed or open status of the two-shell grab bucket 2 further comprises a detection circuit 16 operationally connected to the magnetic field sensor 14 for receiving said signal and discriminating whether the shells 3, 5 of the grab bucket 2 are in a complete closed or open angular position or not. According to a preferred embodiment, the detection circuit 16 is housed in the housing seat 12 of the first container 7.

Preferably the first container 7 is attached to a first outer side wall of the first shell 3, more preferably so as not to receive excessive stresses, and the second container 8 is attached to a second outer side wall of the second shell 4, more preferably so as not to receive excessive stresses. In the completely closed angular position the first and second side wall respectively of the first and of the second shell are adjacent to each other and aligned and the first container 7 is alongside the second container 8.

According to one embodiment, the signal provided in output by the magnetic field sensor 14 is a binary signal, having a first level if the two shells 3, 4 are in the completely closed angular position and a second level otherwise.

According to a preferred embodiment, the magnetic field sensor 14 is a Reed sensor and the magnetic field generator 15 is a permanent magnet adapted to determine a switching of the state (i.e. an opening and/or closing of the contacts) of the Reed sensor. More preferably, in such embodiment the permanent magnet 15 is a magnet comprising a plurality of polarised magnetic discs. Said plurality of polarised magnetic discs advantageously makes it possible to obtain a concentrated and oriented magnetic field to ensure, in an environment saturated with ferrous materials such as the grab bucket structure 2, an optimal magnetic flow to influence the Reed sensor 14.

In an alternative and currently less preferred embodiment, the magnetic field sensor 14 is a Hall sensor.

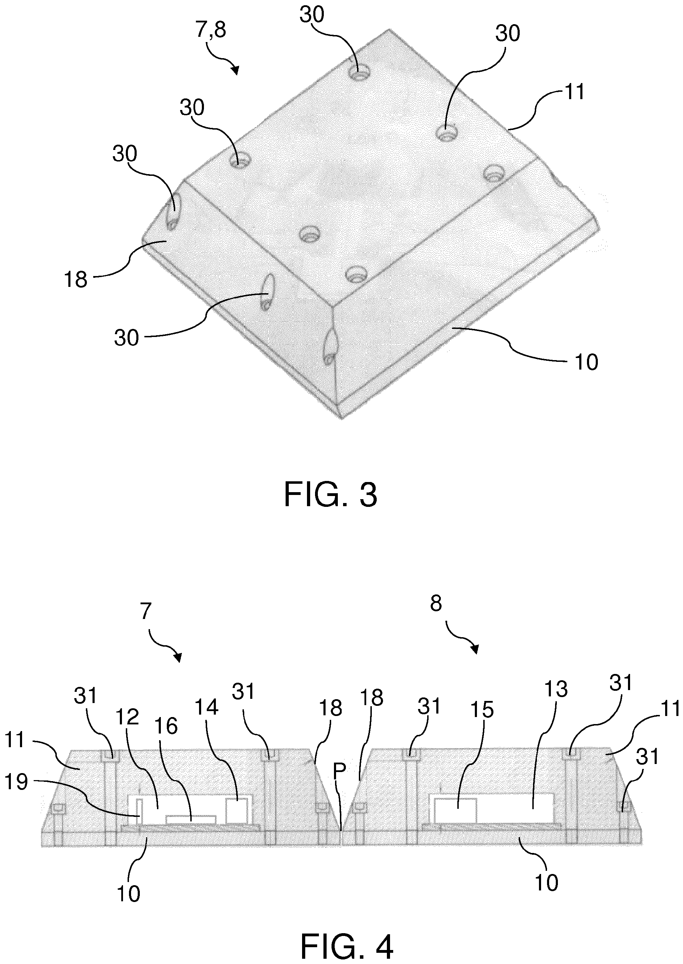

With reference to figures 3 and 4, according to a particularly advantageous embodiment, the first 7 and the second container 8 respectively comprise a first 18 and a second side wall 18 which in the fully closed position of the shells 3, 4 face each other and are inclined to each other to diverge from a point P of minimum distance P. This advantageously allows the containers 7, 8 to have a shape which obstructs as little as possible the closing movement of the shells 3, 4 inside the loose material to be collected, in order to reduce the stresses on the containers 7, 8, and so as to avoid as much as possible that loose material positions itself between the two containers, 7 8 when the two shells 3, 4 are close to reaching the completely closed angular position. Preferably all the remaining side walls of the containers 7, 8 are also inclined so that the containers are shaped overall as a truncated pyramid with the biggest base facing and applied to the respective wall, preferably external, of the shells 3, 4 of the grab bucket 2.

According to one embodiment, the first 7 and the second container 8 each comprise an attachment base 10 and a cover element 11 coupled to the attachment base 10 and the cover element 11 is made of a synthetic insulation material with high resistance, such as polyoxymethylene. Preferably, the attachment base 10 is a plate-shaped base made of steel and can be welded or soldered to a wall, preferably the upper or side wall of the respective shell 3, 4.

According to a preferred embodiment, the base 10 and the cover element 11 are coupled together using bolts 31 having a head and a stem, at least partially threaded, wherein the head of the bolt 31 projects laterally from the stem. The cover element 11 includes a plurality of through openings 30 adapted to be crossed by the bolts 31 and to retain said bolts and the through openings 30 are provided with input portions widened to accommodate the heads of said bolts 31 so that these do not protrude outside the walls of the cover element 11.

According to one embodiment, the detecting system 7, 8, 21 comprises:
- a wireless transmitter 19 connected to the detection circuit 16 and housed inside the first housing seat 12;
- a power source connected to the wireless transmitter 19 and to the detection circuit 16 and housed inside the first housing seat 12;
- a wireless receiver 21 adapted to communicate with said wireless transmitter 19;
- at least one optical and/or acoustic signalling device 22,23,24 operatively connected to the wireless receiver 21 and adapted to be installed on a command station 20 of the two-shell grab bucket 2 and adapted to signal the closing status of the grab bucket to the operator on the basis of information transmitted by the wireless transmitter 19 to the wireless receiver 21.

Preferably the wireless receiver 21 is connected to a control unit provided in the detecting system and responsible for controlling the above at least one optical and/or acoustic signalling device 22, 23, 24. The control unit 21 is preferably fitted with a RESET button that allows, by means of a special procedure, the restoration of signals in the case of inconsistency being found.

According to one embodiment, the aforesaid power supply source comprises a battery and the detecting system comprises a detection circuit of the charging status of the battery. In such embodiment, the wireless transmitter 19 is such as to send the wireless receiver 21 a signal with information about the charging status of the battery.

Preferably the wireless receiver 21 is installed on the command station 20.

The optical and/or acoustic signalling device 22, 23, 24 for example comprises one or more optical signalling devices such as two lamps 22, 23 of different colours of which one (for example green) is lit in the completely closed position of the shells 3, 4 and the other (for example red) is lit when the shells 3, 4 are in a different angular position. According to one embodiment, alternatively or in addition to the lamps 22, 23, an optical signalling device 24 is provided in the detecting system 1, resting on or placed near the floor 25 of the command station 20, for example in the case in which the floor 25 is, or includes, a grating or is in any case fitted with an opening that allows the operator to see the grab bucket 2 from inside the command station 20. For example, the optical signalling device 24 is a pipe comprising a plurality of LED devices. This way, the operator can advantageously see if the completely closed angular position of the shells has been reached by means of the aforesaid optical signalling device 24 without having to look away from the grab bucket 2.

It can be seen from the above description that a detecting system of the type described above makes it possible to fully achieve the aforementioned purposes with reference to the state of the prior art.

Without prejudice to the principle of the invention, the embodiments and construction details may be varied widely with respect to what has been described and illustrated purely by way of a non-limiting example, without thereby departing from the scope of the invention as defined in the appended claims.

For example, in a possible production variant two pairs of containers 7, 8 are provided for with the relative contents described above (magnetic field generator, magnetic field sensor, wireless transmitter, etc.), the two pairs being applied to two opposite and outer side walls of the shells 3 and 4. In such embodiment it is possible to provide that each of the two aforementioned couples sends via its wireless transmitter 19 the data acquired from the same wireless receiver 21 placed in the command station 20. It is also possible to provide that the two aforementioned wireless transmitters 19 transmit the data acquired to the wireless receiver 21 with a default time lag, to avoid the overlapping of said signals. In this case there is no need to provide duplicated optical or acoustic signalling devices 22, 23, 24, one for each signal received from the wireless receiver.

## Claims

1. Loading and unloading apparatus (1) of loose material comprising:
- a two shell grab bucket (2), equipped with a first (3) and a second (4) shell rotatably hinged to each other so as to be reciprocally moved between a completely open angular position and a completely closed angular position; and
- a system (7, 8, 21) for detecting the state of closure of the two shell grab bucket (2);
**characterised in that** the detecting system (7, 8, 21) comprises:
- a magnetic field sensor (14), adapted to detect the presence of a magnetic field and to provide in output a signal bearing information on said magnetic field;
- a first container (7) attached to the first shell (3) to be integral therewith in movement and comprising a first housing seat (12) which houses the magnetic field sensor (14) ;
- a magnetic field generator (15);
- a second container (8) attached to the second shell (4) to be integral therewith in movement and comprising a second housing seat (13) in which the magnetic field generator (15) is housed;
- a detection circuit (16) operatively connected to the magnetic field sensor (14) to receive said signal and discriminate whether said shells (3, 4) are in the completely closed angular position or not;
wherein the first (7) and the second (8) container are adapted and configured to rotate in relation to one another, each being integral in rotation with the respective shell.

2. Loading and unloading apparatus (1) according to claim 1, wherein said signal is a binary signal, having a first level if said shells (3,4) are in the completely closed angular position and a second level otherwise.

3. Loading and unloading apparatus (1) according to any of the previous claims, wherein the magnetic field sensor (14) is a Reed sensor and the magnetic field generator (15) is a permanent magnet.

4. Loading and unloading apparatus (1) according to claim 3, wherein the permanent magnet is a magnet comprising a plurality of polarised magnetic discs.

5. Loading and unloading apparatus (1) according to any of the previous claims, wherein the attachment position of said magnetic generator (15) inside said second housing seat of the housing (13) is adjustable.

6. Loading and unloading apparatus (1) according to any of the previous claims, wherein said first (7) and said second container (8) respectively comprise a first (18) and a second wall (18) which in the completely closed position face each other and are inclined to each other to diverge from a point (P) of minimum distance.

7. Loading and unloading apparatus (1) according to any of the previous claims comprising:
- a wireless transmitter (19) connected to said detection circuit (16) and housed inside said first housing seat (12) ;
- a power source connected to said wireless transmitter (19) and to said detection circuit (16) and housed inside said first housing seat (12);
- a wireless receiver (21) adapted to communicate with said wireless transmitter (19);
- an optical signalling device (22,23,24) installed on a command station (20) of said bucket (2) and adapted to signal the closing status of said bucket to the operator on the basis of information transmitted by the wireless transmitter (19) to the wireless receiver (21).

8. Loading and unloading apparatus (1) according to claim 7, wherein the power source comprises a battery and the detecting system (7,8, 21) comprises a detection circuit of the battery charge status and wherein said wireless transmitter (19) is such as to send the wireless receiver (21) a signal bearing information about the charge status of said battery.

9. Loading and unloading apparatus (1) according to any of the previous claims, wherein said first (7) and (8) said second container each comprise an attachment base (10) and a cover element (11) coupled to the attachment base (10) and wherein the cover element (11) is made of polyoxymethylene.

10. Loading and unloading apparatus (1) according to claim 9, wherein the attachment base (10) is a plate-shaped base made of steel.

11. Loading and unloading apparatus (1) according to claims 9 or 10, wherein the base (10) and said cover element (11) are coupled together using bolts (31) having a head and a stem, wherein said head projects laterally from the stem and wherein said cover element (11) includes through openings (30) adapted to be crossed by said bolts (31) and to retain said bolts, and wherein said through openings are provided with input portions widened to accommodate the heads of such bolts (31) so that these do not protrude outside the walls of the cover element (11).

12. Loading and unloading apparatus (1) according to any one of the previous claims in which in said completely closed angular position said first and said second side wall are adjacent and aligned with each other and the first container (7) is alongside the second container (8).

13. Loading and unloading apparatus (1) of loose material according to any one of the previous claims, further comprising a command station (20) of said bucket in which said command station has a floor (25) and wherein the detecting system comprises an optical signalling device (24) resting on, or placed in proximity of, the floor (25) of the command station (20).

## Patentansprüche

1. Greifereinrichtung (1) für loses Material, umfassend:
- eine zweischalige Greifschaufel (2), die mit einer ersten Schale (3) und einer zweiten Schale (4) versehen ist, welche drehbar aneinander angelenkt sind, so dass sie zwischen einer vollständig offenen Winkellage und einer vollständig geschlossenen Winkellage hin und her bewegt werden können; und
- ein System (7, 8, 21) zur Überwachung des Schließzustands der zweischaligen Greifschaufel (2);
**dadurch gekennzeichnet, dass** das Überwachungssystem (7, 8, 21) umfasst:
- einen Magnetfeldsensor (14), der dazu angepasst ist, das Vorliegen eines Magnetfeldes zu erfassen und ein Signal auszugeben, das Informationen über das Magnetfeld vermittelt;
- einen ersten Behälter (7), der so an der ersten Schale (3) befestigt ist, dass er sich damit einstückig bewegt, und der einen ersten Gehäusesitz (12) umfasst, in dem der Magnetfeldsensor (14) aufgenommen ist;
- eine Magnetfelderzeugungseinrichtung (15);
- einen zweiten Behälter (8), der so an der zweiten Schale (4) befestigt ist, dass er sich damit einstückig bewegt, und der einen zweiten Gehäusesitz (13) umfasst, in dem die Magnetfelderzeugungseinrichtung (15) aufgenommen ist;
- eine Erfassungsschaltung (16), die so mit dem Magnetfeldsensor (14) wirkverbunden ist, dass sie das Signal empfängt und feststellt, ob die Schalen (3, 4) sich in der vollständig geschlossenen Winkellage befinden oder nicht;
wobei der erste Behälter (7) und der zweite Behälter (8) dazu angepasst und konfiguriert sind, sich in Relation zueinander zu drehen, wobei sich jeder einstückig mit der jeweiligen Schale dreht.

2. Greifereinrichtung (1) nach Anspruch 1, wobei es sich bei dem Signal um ein binäres Signal handelt, das einen ersten Pegel aufweist, wenn die Schalen (3, 4) sich in der vollständig geschlossenen Winkellage befinden, und andernfalls einen zweiten Pegel aufweist.

3. Greifereinrichtung (1) nach einem der vorstehenden Ansprüche, wobei es sich bei dem Magnetfeldsensor (14) um einen Reed-Sensor handelt und bei der Magnetfelderzeugungseinrichtung (15) um einen Dauermagneten.

4. Greifereinrichtung (1) nach Anspruch 3, wobei es sich bei dem Dauermagneten um einen Magneten handelt, der eine Mehrzahl polarisierter Magnetscheiben umfasst.

5. Greifereinrichtung (1) nach einem der vorstehenden Ansprüche, wobei die Befestigungsposition der Magnetfelderzeugungseinrichtung (15) im Inneren des zweiten Gehäusesitzes des Gehäuses (13) verstellbar ist.

6. Greifereinrichtung (1) nach einem der vorstehenden Ansprüche, wobei der erste Behälter (7) und der zweite Behälter (8) jeweils eine erste Wand (18) und eine zweite Wand (18) umfassen, die in der vollständig geschlossenen Position einander zugewandt sind und zueinander geneigt sind, so dass sie von einem Punkt (P) eines minimalen Abstands abweichen.

7. Greifereinrichtung (1) nach einem der vorstehenden Ansprüche, umfassend:
- eine drahtlose Übertragungseinrichtung (19), die mit der Erfassungsschaltung (16) verbunden ist und im Inneren des ersten Gehäusesitzes (12) aufgenommen ist;
- eine Stromquelle, die mit der drahtlosen Übertragungseinrichtung (19) und der Erfassungsschaltung (16) verbunden ist und im Inneren des ersten Gehäusesitzes (12) aufgenommen ist;
- einen drahtlosen Empfänger (21), der dazu angepasst ist, mit der drahtlosen Übertragungseinrichtung (19) zu kommunizieren;
- eine optische Signalgebungsvorrichtung (22, 23, 24), die an einer Steuerstation (20) der Schaufel (2) montiert ist und dazu angepasst ist, dem Bediener ein Signal über den Schließzustand der Schaufel zu geben basierend auf von der drahtlosen Übertragungseinrichtung (19) an den drahtlosen Empfänger (21) gesendeten Informationen.

8. Greifereinrichtung (1) nach Anspruch 7, wobei die Stromquelle eine Batterie umfasst und das Erfassungssystem (7, 8, 21) eine Erfassungsschaltung des Batterieladezustands umfasst, und wobei die drahtlose Übertragungseinrichtung (19) derart ausgerichtet ist, dass sie ein Signal, das Informationen über den Ladezustand der Batterie vermittelt, an den drahtlosen Empfänger (21) sendet.

9. Greifereinrichtung (1) nach einem der vorstehenden Ansprüche, wobei der erste Behälter (7) und der zweite Behälter (8) jeweils eine Befestigungsbasis (10) und ein Abdeckungselement (11), das mit der Befestigungsbasis (10) gekoppelt ist, umfassen, und wobei das Abdeckungselement (11) aus Polyoxymethylen hergestellt ist.

10. Greifereinrichtung (1) nach Anspruch 9, wobei es sich bei der Befestigungsbasis (10) um eine aus Stahl hergestellte plattenförmige Basis handelt.

11. Greifereinrichtung (1) nach Anspruch 9 oder 10, wobei die Basis (10) und das Abdeckungselement (11) unter Verwendung von Bolzen (31) mit einem Kopf und einem Schaft miteinander gekoppelt sind, wobei der Kopf seitlich von dem Schaft hervorsteht und wobei das Abdeckungselement (11) Durchgangsöffnungen (30) aufweist, die dazu angepasst sind, von den Bolzen (31) durchquert zu werden und die Bolzen zu halten, und wobei die Durchgangsöffnungen mit erweiterten Einführungsabschnitten versehen sind, um die Köpfe der Bolzen (31) derart aufzunehmen, dass diese nicht über die Wände des Abdeckungselements (11) hinaus hervorstehen.

12. Greifereinrichtung (1) nach einem der vorstehenden Ansprüche, wobei die erste und die zweite Seitenwand in einer vollständig geschlossenen Winkellage angrenzend zueinander und miteinander ausgerichtet sind und der erste Behälter (7) sich neben dem zweiten Behälter (8) befindet.

13. Greifereinrichtung (1) für loses Material nach einem der vorstehenden Ansprüche, weiterhin umfassend eine Steuerstation (20) der Schaufel, wobei die Steuerstation einen Boden (25) aufweist, und wobei das Erfassungssystem eine optische Signalgebungsvorrichtung (24) umfasst, die sich auf dem Boden (25) der Steuerstation (20) befindet oder in unmittelbarer Nähe davon angeordnet ist.

## Revendications

1. Appareil de chargement et de déchargement (1) de matériau en vrac comprenant :
- un godet preneur à deux coques (2), équipé d'une première (3) et d'une seconde (4) coques articulées l'une à l'autre en rotation de sorte à être déplacées alternativement entre une position angulaire complètement ouverte et une position angulaire complètement fermée ; et
- un système (7, 8, 21) pour la détection de l'état de fermeture du godet preneur à deux coques (2) ;
**caractérisé en ce que**
le système de détection (7, 8, 21) comprend :
- un capteur de champ magnétique (14), adapté pour détecter la présence d'un champ magnétique et pour fournir en sortie un signal porteur d'information sur ledit champ magnétique ;
- un premier contenant (7) attaché à la première coque (3) pour être en mouvement d'un seul tenant avec celle-ci et comprenant un premier siège de logement (12) qui loge le capteur de champ magnétique (14) ;
- un générateur de champ magnétique (15) ;
- un second contenant (8) attaché à la seconde coque (4) pour être en mouvement d'un seul tenant avec celle-ci et comprenant un second siège de logement (13) dans lequel le générateur de champ magnétique (15) est logé ;
- un circuit de détection (16) raccordé pour fonctionner avec le capteur de champ magnétique (14) pour recevoir ledit signal et distinguer si lesdites coques (3, 4) sont dans la position angulaire complètement fermée ou non ;
dans lequel le premier (7) et le second (8) contenants sont adaptés et configurés pour tourner l'un par rapport à l'autre, chacun étant en rotation d'un seul tenant avec la coque respective.

2. Appareil de chargement et de déchargement (1) selon la revendication 1, dans lequel ledit signal est un signal binaire, présentant un premier niveau si lesdites coques (3, 4) sont dans la position angulaire complètement fermée et autrement un second niveau.

3. Appareil de chargement et de déchargement (1) selon l'une quelconque des revendications précédentes, dans lequel le capteur de champ magnétique (14) est un capteur à lames souples et le générateur de champ magnétique (15) est un aimant permanent.

4. Appareil de chargement et de déchargement (1) selon la revendication 3, dans lequel l'aimant permanent est un aimant comprenant une pluralité de disques magnétiques polarisés.

5. Appareil de chargement et de déchargement (1) selon l'une quelconque des revendications précédentes, dans lequel la position d'attache dudit générateur magnétique (15) dans ledit second siège du logement (13) est réglable.

6. Appareil de chargement et de déchargement (1) selon l'une quelconque des revendications précédentes, dans lequel ledit premier (7) et ledit second contenant (8) comprennent respectivement une première (18) et une seconde paroi (18) qui dans la position complètement fermée se font face l'une à l'autre et sont inclinées l'une vers l'autre pour diverger d'un point (P) d'une distance minimum.

7. Appareil de chargement et de déchargement (1) selon l'une quelconque des revendications précédentes, comprenant :
- un émetteur sans fil (19) raccordé audit circuit de détection (16) et logé dans ledit premier siège de logement (12) ;
- une source d'alimentation raccordée audit émetteur sans fil (19) et audit circuit de détection (16) et logée dans ledit premier siège de logement (12) ;
- un récepteur sans fil (21) adapté pour communiquer avec ledit émetteur sans fil (19) ;
- un dispositif de signalisation optique (22, 23, 24) installé sur un poste de commande (20) dudit godet (2) et adapté pour signaler le statut de fermeture dudit godet à l'opérateur sur la base d'information transmise par l'émetteur sans fil (19) au récepteur sans fil (21).

8. Appareil de chargement et de déchargement (1) selon la revendication 7, dans lequel la source d'alimentation comprend une batterie et le système de détection (7, 8, 21) comprend un circuit de détection du statut de charge de la batterie et dans lequel ledit émetteur sans fil (19) est de sorte à envoyer au récepteur sans fil (21) un signal porteur d'information sur le statut de charge de ladite batterie.

9. Appareil de chargement et de déchargement (1) selon l'une quelconque des revendications précédentes, dans lequel ledit premier (7) et ledit second (8) contenant comprennent chacun une base d'attache (10) et un élément de couvercle (11) couplé à la base d'attache (10) et dans lequel l'élément de couvercle (11) est réalisé en polyoxyméthylène.

10. Appareil de chargement et de déchargement (1) selon la revendication 9, dans lequel la base d'attache (10) est une base en forme de plaque réalisée en acier.

11. Appareil de chargement et de déchargement (1) selon la revendication 9 ou 10, dans lequel la base (10) et ledit élément de couvercle (11) sont couplés ensemble en utilisant des boulons (31) présentant une tête et une tige, dans lequel ladite tête fait saillie latéralement de la tige et dans lequel ledit élément de couvercle (11) inclut des ouvertures débouchantes (30) adaptées pour être traversées par lesdits boulons (31) et pour retenir lesdits boulons, et dans lequel lesdites ouvertures débouchantes sont dotées de portions d'entrée élargies pour loger les têtes de tels boulons (31) de sorte que celles-ci ne fassent pas saillie en dehors des parois de l'élément de couvercle (11).

12. Appareil de chargement et de déchargement (1) selon l'une quelconque des revendications précédentes, dans lequel dans ladite position angulaire complètement fermée ladite première et ladite seconde parois latérales sont adjacentes et alignées l'une sur l'autre et le premier contenant (7) est le long du second contenant (8).

13. Appareil de chargement et de déchargement (1) de matériau en vrac selon l'une quelconque des revendications précédentes, comprenant en outre un poste de commande (20) dudit godet dans lequel ledit poste de commande présente un plancher (25) et dans lequel le système de détection comprend un dispositif de signalisation optique (24) reposant sur le, ou placé à proximité du, plancher (25) du poste de commande (20).
